# EUROPÄISCHE PATENTSCHRIFT

(11) **EP 1 564 096 B1**
(45) Veröffentlichungstag und Bekanntmachung des Hinweises auf die Patenterteilung: **17.01.2007**
(21) Anmeldenummer: 04030105.3
(22) Anmeldetag: 20.12.2004
(51) Int. Cl.: B60T 7/10, B60T 17/22, B60T 13/74

(54) **Überprüfung der Funktionsfähigkeit einer Feststellbremse durch Auswertung der Raddrehzahlen**
Checking the proper functioning of a parking brake by evaluating the rotation speed of a wheel
La vérification du fonctionnement correcte d'un frein de stationnement par l'évaluation de la vitesse de rotation d'un roue

(30) Priorität: 11.02.2004 DE 102004006697
(43) Veröffentlichungstag der Anmeldung: 17.08.2005
(73) Patentinhaber: ROBERT BOSCH GMBH, 70442 Stuttgart (DE)
(72) Erfinder: Haffelder, Joerg, 74906 Bad Rappenau (DE); Blattert, Dieter, 74366 Kirchheim/Neckar (DE)

(56) Entgegenhaltungen:
- DE-A1- 4 129 919
- DE-A1- 10 021 601
- DE-A1- 10 230 007
- DE-A1- 19 500 834

## Beschreibung

Die Erfindung betrifft ein Verfahren zur Überprüfung der Funktionsfähigkeit einer elektrisch betätigten Feststellbremse gemäß dem Oberbegriff des Patentanspruchs 1, sowie ein Feststellbremssystem gemäß dem Oberbegriff des Patentanspruchs 7. Ein gattungsgemäßes Verfahren, bzw. Feststellbremssystem, wobei zur überprüfung der Funktionsfähigkeit der Feststellbremse die Raddrehzahl eines Rades ausgewertet wird, ist aus der DE 4 129 919 bekannt geworden.

Moderne Fahrzeuge umfassen häufig ein elektrisch betätigtes Feststellbremssystem, wie z.B. eine automatische Parkbremse (APB). Derartige Systeme umfassen i. d. R. ein Bedienelement, wie z.B. einen Druckknopf, mit dem die Feststellbremse verriegelt und/oder gelöst werden kann. Ein mit dem Bedienelement verbundenes Steuergerät erkennt den Feststellbremswunsch und steuert entsprechend ein Stellglied, wie z.B. einen Elektromotor oder eine Hydraulikpumpe, an, um die Feststellbremse anzuziehen oder zu lösen.

Die Feststellbremse umfasst neben der eigentlichen Radbremse auch eine mechanische Verriegelungseinrichtung, die die Bremszangen in der angezogenen Stellung verriegelt. Das Fahrzeug kann somit bei angezogener Feststellbremse mechanisch und energielos festgehalten werden. Die Verriegelungseinrichtung wird in der Regel ebenfalls durch hydraulischen bzw. pneumatischen Druck betätigt.

Moderne automatisierte Feststellbremssysteme bieten für den Fahrer einen deutlichen Komfort- und Sicherheitsgewinn, da sie durch einen einfachen Knopfdruck bedient werden. Die Bedienung der Feststellbremse lässt den Fahrer jedoch nicht erkennen, ob die Feststellbremse tatsächlich verriegelt hat bzw. gelöst wurde. Bei den bekannten Feststellbremssystemen fehlt bislang eine Funktionsüberwachung und die entsprechende Rückmeldung an den Fahrer.

Es ist daher die Aufgabe der vorliegenden Erfindung, ein Verfahren sowie eine Vorrichtung zur Überprüfung der Funktionsfähigkeit einer elektrisch betätigten Feststellbremse zu schaffen, um den Fahrer bei einem Fehler gegebenenfalls warnen zu können.

Gelöst wird diese Aufgabe gemäß der Erfindung durch die im Patentanspruch 1 sowie im Patentanspruch 7 angegebenen Merkmale. Weitere Ausgestaltungen der Erfindung sind Gegenstand von Unteransprüchen.

Ein wesentlicher Aspekt der Erfindung besteht darin, die Information der Räddrehzahlsensoren zu nutzen, um die Funktionsfähigkeit des Feststellbremssystems zu überprüfen. Grundsätzlich lässt sich z.B. aus dem selbständigen Anrollen eines geparkten Fahrzeugs darauf schließen, dass die Feststellbremse nicht ordnungsgemäß verriegelt hat (vorausgesetzt das Fahrzeug steht auf einer Steigung und der Fahrer betätigt nicht die Fußbremse). Andererseits lässt sich aus dem Nicht-in-Bewegung-Setzen eines geparkten Fahrzeugs nach dem Lösen der Feststellbremse darauf schließen, dass die Feststellbremse nicht ordentlich entriegelt wurde (vorausgesetzt das Fahrzeug steht auf einer Steigung). Die Auswertung der Raddrehzahlinformation hat dabei den wesentlichen Vorteil, dass keine zusätzliche Sensorik, wie z.B. ein Druck- oder Kraftsensor an der Feststellbremse vorgesehen werden muss und dass die bei üblichen Fahrdynamikregelungssystemen (wie z.B. ESP) ohnehin vorhandenen Raddrehzahlsensoren verwendet werden können.

Im Folgenden werden einige bevorzugte Ausführungsbeispiele zum Überprüfen der Funktionsfähigkeit einer Feststellbremse näher erläutert:

Zur Überprüfung, ob die Feststellbremse sicher verriegelt hat, wird gemäß einer ersten Ausführungsform der Erfindung eine Prüfroutine durchgeführt, bei der der Bremsdruck an wenigstens einer der Feststellbremsen und an wenigstens einer anderen Radbremse (ohne Feststellfunktion) erhöht wird. Die Prüfroutine wird vorzugsweise im Stillstand des Fahrzeugs durchgeführt, nachdem das Bedienelement (z.B. ein Druckknopf) betätigt wurde. Nach dem Druckaufbau an Feststellbremse und Radbremse wird der Bremsdruck an der Radbremse wieder abgebaut. Setzt sich nun das Fahrzeug in Bewegung, muss davon ausgegangen werden, dass die Feststellbremse nicht ordnungsgemäß verriegelt hat. Das In-Bewegung-Setzen wird mittels der Raddrehzahlsensoren erfasst. Die erhaltene Drehzahlinformation wird z.B. mit einem vorgegebenen Schwellenwert (z.B. ungefähr 0m/s) verglichen, wodurch ein Fehler des Feststellbremssystems festgestellt werden kann. Voraussetzung für die vorstehend beschriebene Prüfroutine ist, dass das Fahrzeug auf einer Steigung steht und der Fahrer die Fußbremse nicht betätigt.

Mit der beschriebenen Prüfroutine lässt sich nur die Fehlfunktion (Fehler-Fall) des Systems ermitteln. Setzt sich das Fahrzeug dagegen nicht in Bewegung, kann keine eindeutige Aussage getroffen werden, da das Fahrzeug möglicherweise in der Ebene abgestellt wurde oder der Fahrer die Bremse betätigt. Soll auch eine Aussage über die Funktionsfähigkeit (Nicht-Fehler-Fall) des Systems getroffen werden können, muss eine Information über die Fahrbahnsteigung und die Bremsbetätigung ausgewertet werden. Fahrbahnsteigung und Bremsbetätigung können z.B. durch entsprechende Sensoren erfasst werden. Wahlweise kann die Fahrbahnsteigung z.B. auch über den vom Fahrer zum Anhalten des Fahrzeugs benötigten Bremsdruck abgeschätzt werden. Mit Hilfe der zusätzlichen Information über die Fahrbahnsteigung und die Bremsbetätigung lässt sich damit auch die Funktionsfähigkeit positiv bestätigen (wenn das Fahrzeug auf einer Steigung steht und der Fahrer die Fußbremse nicht betätigt).

Zur Überprüfung, ob die Feststellbremse nach einer Löseanforderung ordnungsgemäß entriegelt hat, wird gemäß einer zweiten Ausführungsform der Erfindung eine Prüfroutine durchgeführt, bei der der Bremsdruck an einer normalen Radbremse (ohne Feststellfunktion) erhöht und gleichzeitig oder danach die Feststellbremsen entriegelt und der Bremsdruck an den Feststellbremsen abgebaut wird. Die Prüfroutine wird vorzugsweise im Stillstand des Fahrzeugs durchgeführt. Nach dem Druckaufbau an der Radbremse bzw. Druckabbau an den Feststellbremsen wird der Bremsdruck an der Radbremse wieder abgebaut. Sofern das Fahrzeug nun anrollt, kann von einer korrekten Funktionsfähigkeit des Feststellbremssystems ausgegangen werden. Setzt sich das Fahrzeug dagegen nicht in Bewegung, kann keine eindeutige Aussage getroffen werden, da das Fahrzeug möglicherweise in der Ebene abgestellt wurde oder der Fahrer die Bremse betätigt.

Soll auch eine Aussage über die Fehlfunktion (Fehler-Fall) des Systems getroffen werden können, wird vorgeschlagen, wiederum die Fahrbahnsteigung und die Bremsbetätigung auszuwerten. Ein Fehler (die Feststellbremse hat nicht ordnungsgemäß gelöst) wird in diesem Fall erkannt, wenn das Fahrzeug auf einer Steigung steht, die Fußbremse nicht betätigt wird und sich das Fahrzeug dennoch nicht in Bewegung setzt. Die Bewegung des Fahrzeugs wird erfindungsgemäß durch Auswertung der Drehzahlinformation ermittelt.

Vorstehend wurde die Entriegelung der Feststellbremse bei parkendem Fahrzeug überprüft. Die Entriegelung der Feststellbremse kann auch während eines Anfahrvorgangs überprüft werden.

In diesem Fall wird zunächst überprüft, ob sich das Fahrzeug nach einer Löseanforderung der Feststellbremse in Bewegung setzt. Dies kann z.B. durch Auswertung des Motor- oder Kupplungsmoments aus dem Motor-Steuergerät, der Ganginformation, Fahrpedalinformation und/oder durch Auswertung der Raddrehzahlsensoren erfolgen. Eine Aussage darüber, ob die Feststellbremse ordnungsgemäß gelöst hat, kann schließlich durch Auswertung der Raddrehzahlen an einem Rad mit Feststellbremse und an einem Rad mit normaler Radbremse erhalten werden. Wenn die Differenz der Raddrehzahl der genannten Räder größer ist, als ein vorgegebener Schwellenwert, hat sich die Feststellbremse nicht ordnungsgemäß gelöst. D.h., es treten deutliche Drehzahlunterschiede auf. Setzen sich die Räder mit Feststellbremse und Räder mit normaler Radbremse dagegen mit ähnlicher Drehzahl in Bewegung, kann davon ausgegangen werden, dass das Feststellbremssystem ordnungsgemäß entriegelt hat.

Wenn sich die Räder mit Feststellbremse und mit normaler Radbremse mit ähnlicher Drehzahl in Bewegung setzen, obwohl die Feststellbremse zuvor nicht entriegelt wurde, kann darüber hinaus davon ausgegangen werden, dass die Feststellbremse trotz Verriegelungs-Anforderung nicht verriegelt war.

Neben der Überwachung der Funktionsfähigkeit des Feststellbremssystems als Ganzes ist es darüber hinaus auch möglich, die einzelnen Feststellbremsen bzw. deren Verriegelungseinrichtungen einzeln zu überprüfen. Zu diesem Zweck wird in einem ersten Verfahrensschritt die Steigung der Fahrbahn ermittelt. Hierzu kann z.B. ein Neigungssensor vorgesehen sein oder die Fahrbahnsteigung z.B. über den vom Fahrer zum Anhalten des Fahrzeugs eingestellten Bremsdruck abgeschätzt werden. Daraus kann ermittelt werden, ob sich das Fahrzeug an einer flachen oder einer steilen Steigung befindet. Befindet sich das Fahrzeug an einer flachen Steigung, wird wenigstens eine normale Fahrzeugbremse angezogen und eine der Feststellbremsen betätigt und verriegelt. Danach wird der Bremsdruck an der normalen Fahrzeugbremse und der Feststellbremse wieder abgebaut. Sofern sich das Fahrzeug nun in Bewegung setzt, ist diese Feststellbremse (z.B. am rechten Hinterrad) fehlerhaft. Bleibt das Fahrzeug dagegen stehen, kann von einer ordnungsgemäß funktionierenden Feststellbremse ausgegangen werden. Dieses Verfahren kann nur auf Steigungen bis zu einem maximalen Steigungswinkel durchgeführt werden, da das Fahrzeug nur von einer Feststellbremse gehalten wird.

Die übrigen Feststellbremsen können unmittelbar nachfolgend oder nach einem späteren Zeitpunkt in gleicher Weise überprüft werden. Die genannte Überprüfung der einzelnen Feststellbremsen wird vorzugsweise in vorgegebenen Intervallen durchgeführt, wie z.B. nach jeder fünfzigsten oder einhundertsten Betätigung der Feststellbremse.

Im Fehlerfall wird vorzugsweise eine Warnmeldung generiert und der Fahrer z.B. akustisch oder optisch auf die Fehlfunktion der Feststellbremse hingewiesen.

Ein erfindungsgemässes Feststellbremssystem umfasst im wesentlichen ein Bedienelement zum Feststellen und/oder Lösen der Feststellbremse, ein Stellglied, wie z.B. eine Hydraulikpumpe, zum Variieren des an der Feststellbremse wirkenden Bremsdrucks und ein Steuergerät, das das Stellglied auf Anforderung ansteuert, sowie Raddrehzahlsensoren, deren Sensorsignal ausgewertet wird, um die Funktion der Feststellbremse zu überprüfen. Das Steuergerät ist programmtechnisch derart eingerichtet, dass einer oder mehrere der vorstehend genannten Verfahren ausgeführt werden können.

Die Erfindung wird nachstehend anhand der beigefügten Zeichnungen beispielhaft näher erläutert. Es zeigen:
Fig. 1 eine schematische Darstellung eines aus dem Stand der Technik bekannten Feststellbremssystems;
Fig. 2 ein Flußdiagramm der wesentlichen Verfahrensschritte bei einer Überprüfung, ob die Feststellbremse ordnungsgemäß verriegelt hat;
Fig. 3 ein Flußdiagramm der wesentlichen Verfahrensschritte bei einer Überprüfung, ob die Feststellbremse korrekt entriegelt hat;
Fig. 4 ein Flußdiagramm der wesentlichen Verfahrensschritte bei einer Überprüfung, ob die Feststellbremse ordentlich entriegelt hat, während eines Anfahrvorgangs; und
Fig. 5 die wesentlichen Verfahrensschritte zur Diagnose der einzelnen Feststellbremsen bzw. deren Verriegelungseinrichtungen.

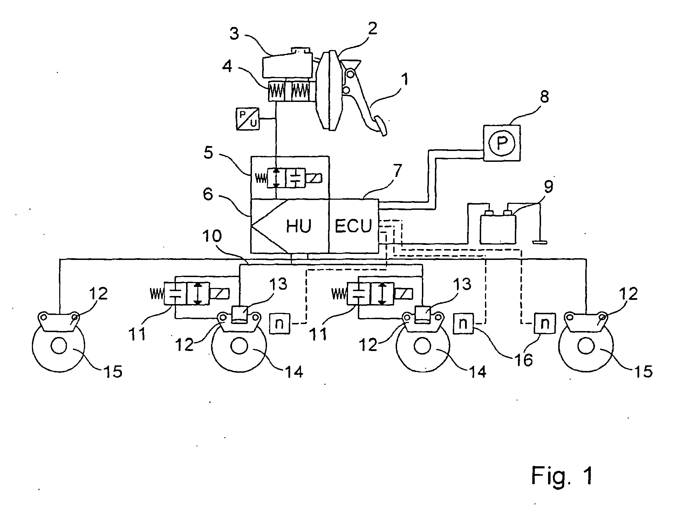

Fig. 1 zeigt eine schematische Ansicht eines Feststellbremssystems. Das System umfasst im wesentlichen ein Bedienelement 8 (Druckknopf), ein Steuergerät 7, ein Hydroaggregat 6 und mehrere Feststellbremsen 12, 13. Jede Feststellbremse 12,13 umfasst eine Fahrzeugbremse 12 mit einer Verriegelungseinrichtung 13. Bei einer Betätigung des Bedienelements 8 steuert das Steuergerät 7 das Hydroaggregat 6, genauer eine Hydraulikpumpe, an, die in einer Hydraulikleitung 10 Bremsdruck aufbaut, der sowohl zum Betätigen der Radbremse 12 als auch zum Betätigen der Verriegelungseinrichtung 13 genutzt wird. Das Bremssystem umfasst ferner ein Hydraulikventil 11, das vom Steuergerät 7 angesteuert wird, um die Verriegelungseinrichtung 13 zu verriegeln bzw. zu lösen. Das Bremssystem wird von einer Batterie 9 mit Strom versorgt.

Bei diesem Ausführungsbeispiel sind die Feststellbremsen 12,13 nur an den in der Mitte dargestellten Rädern 14 vorgesehen. Die anderen Räder 15 haben lediglich eine normale Radbremse (ohne Verriegelungseinrichtung 13).

Das Schaltventil 5 dient dazu, zwischen einem Automatikbetrieb und einem Fußbremsbetrieb umzuschalten. Im letzteren Betriebsmodus werden die Fahrzeugbremsen 12 durch Betätigung des Fußbremspedals 1 betätigt.

Das Steuergerät 7 ist in diesem Feststellbremssystem derart konfiguriert, dass die im Folgenden beispielhaft beschriebenen Verfahren zur Überprüfung der Funktionsfähigkeit der Feststellbremse durchgeführt werden können.

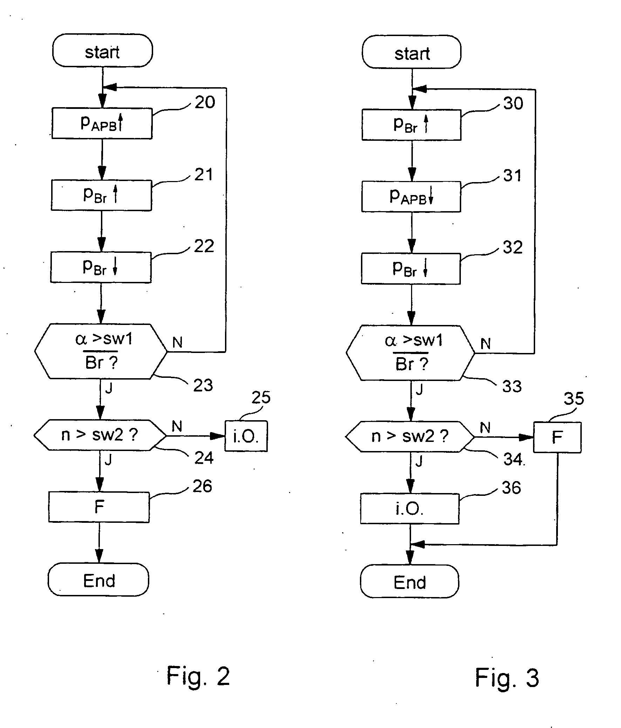

Fig. 2 zeigt die wesentlichen Verfahrensschritte eines Verfahrens zur Überprüfung, ob die Feststellbremse nach einer Bedienung des Druckknopfes 8 ordnungsgemäß verriegelt hat. Dabei wird in einem ersten Schritt 20 durch Ansteuerung der Hydraulikpumpe 6 der Bremsdruck an den Feststellbremsen 12,13 und danach der Bremsdruck an den anderen Radbremsen 12 erhöht. Der Bremsdruck an den normalen Radbremsen 12 wird dann langsam wieder abgebaut. Ferner wird ermittelt, ob das Fahrzeug an einer Steigung steht und die Fußbremse 1 betätigt wurde. Dies kann mittels geeigneter Sensoren gemessen oder z.B. aus fahrdynamischen Betrachtungen geschätzt werden. Sofern das Fahrzeug nicht an einer Steigung steht oder die Fußbremse 1 vom Fahrer betätigt wird (Fall N), verzweigt das Verfahren zurück zum Anfang. Andernfalls wird in Schritt 24 überprüft, ob sich das Fahrzeug in Bewegung setzt. Dies erfolgt durch Auswertung wenigstens einer Raddrehzahl n, die mit einem vorgegebenen Schwellenwert SW verglichen wird. Sofern die Drehzahl kleiner ist als der Schwellenwert SW (Fall N) wird in Schritt 25 entschieden, dass die Feststellbremse ordnungsgemäß verriegelt ist. Falls der vorgegebene Schwellenwert SW überschritten wird, wird in Schritt 26 ein Fehlerzustand erkannt (Fall J).

Dieses Verfahren kann auch ohne die Überprüfung in Schritt 23 durchgeführt werden. In diesem Fall lässt sich jedoch nur eine Fehlfunktion der Feststellbremse 12,13 ermitteln, wenn sich das Fahrzeug trotz angezogener Feststellbremse 12,13 in Bewegung setzt. Die Funktionsfähigkeit (Schritt 25) der Feststellbremse 12,13 kann dagegen nicht eindeutig festgestellt werden.

Fig. 3 zeigt die wesentlichen Verfahrensschritte eines Verfahrens zum Überprüfen, ob die Feststellbremse nach einer Löseanforderung ordnungsgemäß entriegelt hat. Hierzu wird bei stillstand des Fahrzeugs, nach Eingang einer Löseanforderung, zunächst der Bremsdruck an den normalen Radbremsen 12 erhöht und gleichzeitig oder nachher der Bremsdruck an den Feststellbremsen 12,13 wieder abgebaut (Schritt 31). Danach wird auch der Bremsdruck an den anderen Radbremsen 12 in Schritt 32 wieder abgebaut. In Schritt 33 wird wiederum ermittelt, ob das Fahrzeug an einer Steigung steht und ob die Fußbremse 1 betätigt wird. Falls nein (N) verzweigt das Verfahren zurück zum Anfang, falls ja, wird überprüft, ob sich das Fahrzeug in Bewegung setzt. Hierzu wird wiederum wenigstens eine Raddrehzahl n mit einem vorgegebenen Schwellenwert SW verglichen (Schritt 34). Sofern die Drehzahl größer ist als der Schwellenwert SW (Fall J) hat die Feststellbremse 12,13 ordnungsgemäß entriegelt. Dies wird in Schritt 36 festgestellt. Sofern der Schwellenwert SW nicht überschritten wird, wird in Schritt 35 ein Fehlerzustand erkannt.

Auch während eines Anfahrvorgangs kann überprüft werden, ob die Feststellbremse 12,13 ordnungsgemäß entriegelt hat. Hierzu wird in einem Schritt 40 zunächst überprüft, ob sich das Fahrzeug in einem Anfahrvorgang befindet. Der Fahrzustand kann z.B. durch Auswertung der Motorsteuerung oder der Raddrehzahlen erkannt werden. In Schritt 41 wird schließlich überprüft, ob die Differenz der Raddrehzahlen an einem Rad 14 mit Feststellbremse 12,13 und an einem Rad 15 mit normaler Radbremse 12 einen vorgegebenen Schwellenwert SW überschreitet. Bewegen sich die Räder 14,15 mit ähnlicher Raddrehzahl, d.h. kleiner Drehzahldifferenz, kann davon ausgegangen werden, dass die Feststellbremse ordnungsgemäß entriegelt hat. Dies wird in Schritt 42 erkannt (Fall N). Besteht dagegen eine erhebliche Drehzahldifferenz Δn, so werden die Räder 14 mit Feststellbremsen 12,13 weiterhin gebremst. In Schritt 43 wird daher auf einen Fehlerzustand erkannt. In Schritt 44 wird schließlich eine Warnmeldung generiert und der Fahrer optisch,oder akustisch auf den Fehlerzustand hingewiesen.

Mit den vorstehend beschriebenen Verfahren kann das Feststellbremssystem nur als Ganzes auf Funktion bzw. Fehlfunktion überprüft werden. Im Folgenden wird ein Verfahren beschrieben, mit dem auch einzelne Feststellbremsen 12,13 bzw. deren Verriegelungseinrichtungen 13 separat überprüft werden können.

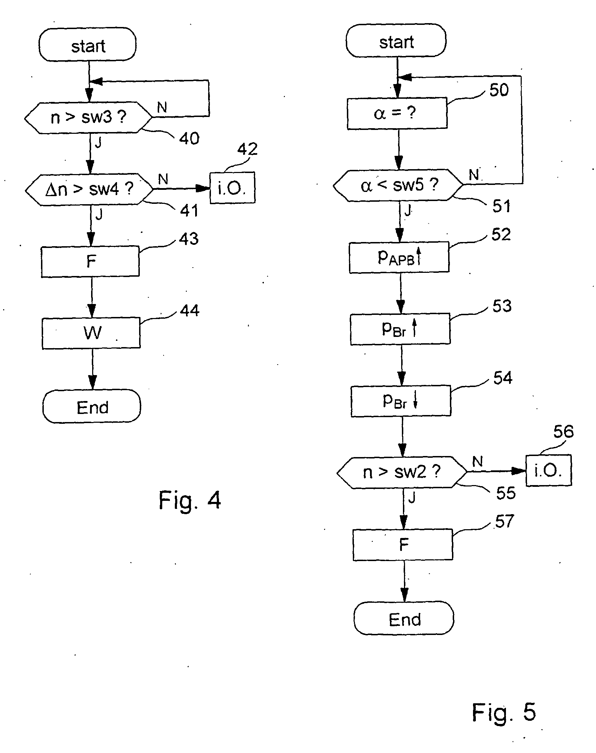

Fig. 5 zeigt ein Verfahren zur Überwachung der einzelnen Feststellbremsen 12,13. Dabei wird in einem ersten Schritt 50 zunächst die Steigung gemessen oder geschätzt, an der sich das Fahrzeug befindet. Ist der Steigungswinkel α kleiner als ein vorgegebener Schwellenwert SW, können im Folgenden die einzelnen Verriegelungseinrichtungen 13 überprüft werden (Fall J). Bei hoher Steigung (Fall N) ist dies nicht möglich, da bei diesem Verfahren nur einzelne Feststellbremsen 12,13 aktiviert werden, die alleine nicht ausreichend stark sind, um das Fahrzeug zu halten.

In Schritt 52 wird zunächst eine der Feststellbremsen 12,13 betätigt und verriegelt und in Schritt 53 der Bremsdruck an wenigstens einer anderen Radbremse 12 aufgebaut. Der Bremsdruck an der Feststellbremse 12,13 und der anderen Radbremse 12 wird in Schritt 54 dann wieder abgebaut. In Schritt 55 wird nun unter Auswertung der Raddrehzahl n überprüft, ob sich das Fahrzeug in Bewegung setzt, falls ja (J) hat die Feststellbremse 12,13 nicht ordnungsgemäß verriegelt, so dass in Schritt 57 ein Fehlerzustand erkannt wird. Wird der vorgegebene Schwellenwert SW dagegen nicht überschritten (Fall N), wird in Schritt 56 die ordnungsgemäße Funktion der Feststellbremse 12,13 bestätigt. Danach wird das Verfahren für eine andere Feststellbremse 12,13 wiederholt.

Die Überprüfung der einzelnen Feststellbremsen wird vorzugsweise in vorgegebenen Intervallen durchgeführt.

### Bezugszeichenliste

- 1: Fußbremse
- 2: Bremskraftverstärker
- 3: Bremsflüssigkeitsbehälter
- 4: Hauptbremszylinder
- 5: Magnetventil
- 6: Hydraulikeinheit
- 7: Steuergerät
- 8: Bedienelement
- 9: Batterie
- 10: Bremsleitung
- 11: Drehzahlsensoren
- 12: Radbremsen
- 13: Verriegelungseinrichtung
- 14: Räder mit Feststellbremse
- 15: Räder mit normaler Radbremse
- 20-26: Verfahrensschritte zum Überprüfen der Verriegelung
- 30-36: Verfahrensschritte zum Überprüfen der Entriegelung
- 40-44: Verfahrensschritte zum Überprüfen der Entriegelung beim Anfahren
- 50-57: Verfahrensschritte zum Überprüfen einzelner Verriegelungseinrichtungen

## Patentansprüche

1. Verfahren zum Überprüfen der Funktionsfähigkeit einer elektrisch betätigten Feststellbremse (12,13), umfassend ein Bedienelement (8) zum Feststellen und/oder Lösen der Feststellbremse (12,13), ein Stellglied (6) zum Variieren des an der Feststellbremse (12,13) wirkenden Bremsdrucks und ein Steuergerät (7), das das Stellglied (6) auf Anforderung ansteuert, wobei eine Information über eine Raddrehzahl (n) ausgewertet wird, um die Funktionsfähigkeit der Feststellbremse (12,13) zu überprüfen,
**dadurch gekennzeichnet, dass** zur Überprüfung, ob die Feststellbremse (12,13) ordnungsgemäß entriegelt ist, der Bremsdruck an einer Radbremse (12) erhöht, eine Feststellbremse (12,13) entriegelt und der Bremsdruck an der Feststellbremse (12,13) abgebaut und danach der Bremsdruck an der Radbremse (12) wieder abgebaut wird, und die Raddrehzahl (n) wenigstens eines Rades (14,15) ermittelt und mit einem vorgegebenen Schwellenwert (SW) verglichen wird, um ein ordnungsgemäßes Lösen der Feststellbremse (12,13) zu überprüfen.

2. Verfahren nach Anspruch 1, **dadurch gekennzeichnet, dass** zum Überprüfen, ob die Feststellbremse (12,13) ordnungsgemäß verriegelt ist, der Bremsdruck an der Feststellbremse (12,13) und an wenigstens einer anderen Radbremse (12) erhöht und der Bremsdruck an der anderen Radbremse (12) wieder abgebaut wird und die Raddrehzahl (n) wenigstens eines Rades (14,15) ermittelt und mit einem vorgegebenen Schwellenwert (SW) verglichen wird, um eine ordnungsgemäße Verriegelung der Feststellbremse (12,13) zu überprüfen.

3. Verfahren nach Anspruch 1, **dadurch gekennzeichnet, dass** zum Überprüfen, ob die Feststellbremse (12,13) ordnungsgemäß entriegelt ist, nach dem Anfahren des Fahrzeugs, die Drehzahl (n) wenigstens eines Rades (14) mit Feststellbremse (12,13) und eines Rades (15) mit normaler Radbremse (12) ermittelt und die Drehzahldifferenz mit einem Schwellenwert (SW) verglichen wird, um das ordnungsgemäße Entriegeln der Feststellbremse (12,13) zu überprüfen.

4. Verfahren nach Anspruch 1, **dadurch gekennzeichnet, dass** zur Überprüfung der Funktionsfähigkeit einer Verriegelungseinrichtung (13) einer Feststellbremse (12,13) die Steigung der Fahrbahn ermittelt und bei geringer Steigung der Bremsdruck in einer normalen Bremse (12) erhöht und nur eine Verriegelungseinrichtung (13) einer Feststellbremse (12,13) verriegelt wird, der Bremsdruck an der normalen Bremse (12) wieder abgebaut und die Drehzahl an wenigstens einem Rad (14,15) ermittelt und mit einem Schwellenwert (SW) verglichen wird, um die Funktionsfähigkeit der betätigten Verriegelungseinrichtung (13) zu überprüfen.

5. Verfahren nach Anspruch 4, **dadurch gekennzeichnet, dass** das gleiche Verfahren anschließend mit der anderen Verriegelungseinrichtung (13) durchgeführt wird.

6. Verfahren nach einem der vorhergehenden Ansprüche, **dadurch gekennzeichnet, dass** in einem Fehlerfall eine Warnmeldung generiert wird.

7. Feststellbremssystem für Kraftfahrzeuge, umfassend ein Bedienelement (8) zum Feststellen und/oder Lösen einer Feststellbremse (12,13), ein Stellglied (6) zum Variieren des an der Feststellbremse (12,13) wirkenden Bremsdrucks und ein Steuergerät (7), dass das Stellglied (6) auf Anforderung ansteuert, wobei das Feststellbremssystem wenigstens einen Raddrehzahlsensor (16) umfasst, dessen Sensorsignal ausgewertet wird, um die Funktionsfähigkeit der Feststellbremse (12,13) zu überprüfen,
**dadurch gekennzeichnet, dass** zur Überprüfung, ob die Feststellbremse (12,13) ordnungsgemäß entriegelt ist, der Bremsdruck an einer Radbremse (12) erhöht, eine Feststellbremse (12,13) entriegelt und der Bremsdruck an der Feststellbremse (12,13) abgebaut und danach der Bremsdruck an der Radbremse (12) wieder abgebaut wird, und die Raddrehzahl (n) wenigstens eines Rades (14,15) ermittelt und mit einem vorgegebenen Schwellenwert (SW) verglichen wird, um ein ordnungsgemäßes Lösen der Feststellbremse (12,13) zu überprüfen.

8. Feststellbremssystem nach Anspruch 7, **dadurch gekennzeichnet, dass** das Steuergerät derart konfiguriert ist, dass eines der in den vorstehend genannten Verfahrensansprüchen beanspruchten Verfahren durchführbar ist.

## Claims

1. Method for checking the operational capability of an electrically operated parking brake (12, 13), comprising an operator control element (8) for applying and/or releasing the parking brake (12, 13), an actuator (6) for varying the brake pressure acting on the parking brake (12, 13), and a controller (7) which actuates the actuator (6) on demand, with an item of information about a wheel speed (n) being evaluated in order to check the operational capability of the parking brake (12, 13),
**characterized in that**, for the purpose of checking whether the parking brake (12, 13) is properly unlocked, the brake pressure on one wheel brake (12) is increased, a parking brake (12, 13) is unlocked and the brake pressure on the parking brake (12, 13) is reduced and then the brake pressure on the wheel brake (12) is reduced again, and the wheel speed (n) of at least one wheel (14, 15) is determined and compared with a prespecified threshold value (SW), in order to check that the parking brake (12, 13) is properly released.

2. Method according to Claim 1, **characterized in that**, for the purpose of checking whether the parking brake (12, 13) is properly locked, the brake pressures on the parking brake (12, 13) and on at least one other wheel brake (12) are increased and the brake pressure on the other wheel brake (12) is reduced again, and the wheel speed (n) of at least one wheel (14, 15) is determined and compared with a prespecified threshold value (SW), in order to check that the parking brake (12, 13) is properly locked.

3. Method according to Claim 1, **characterized in that**, for the purpose of checking whether the parking brake (12, 13) is properly unlocked, the rotational speeds (n) of at least one wheel (14) with a parking brake (12, 13) and of a wheel (15) with a normal wheel brake (12) are determined after the vehicle is started, and the difference in rotational speed is compared with a threshold value (SW), in order to check that the parking brake (12, 13) is properly unlocked.

4. Method according to Claim 1, **characterized in that**, for the purpose of checking the operational capability of a locking device (13) of a parking brake (12, 13), the gradient of the carriageway is determined and, when the gradient is low, the brake pressure in a normal brake (12) is increased and only a locking device (13) of a parking brake (12, 13) is locked, the brake pressure on the normal brake (12) is reduced again and the rotational speed at at least one wheel (14, 15) is determined and compared with a threshold value (SW), in order to check the operational capability of the operated locking device (13).

5. Method according to Claim 4, **characterized in that** the same method is subsequently carried out with the other locking device (13).

6. Method according to one of the preceding claims, **characterized in that** a warning message is generated in the event of a fault.

7. Parking brake system for motor vehicles, comprising an operator control element (8) for applying and/or releasing a parking brake (12, 13), an actuator (6) for varying the brake pressure acting on the parking brake (12, 13), and a controller (7) which actuates the actuator (6) on demand, with the parking brake system comprising at least one wheel speed sensor (16) whose sensor signal is evaluated in order to check the operational capability of the parking brake (12, 13), **characterized in that**, for the purpose of checking whether the parking brake (12, 13) is properly unlocked, the brake pressure on one wheel brake (12) is increased, a parking brake (12, 13) is unlocked, and the brake pressure on the parking brake (12, 13) is reduced and then the brake pressure on the wheel brake (12) is reduced again, and the wheel speed (n) of at least one wheel (14, 15) is determined and compared with a prespecified threshold value (SW), in order to check that the parking brake (12, 13) is properly released.

8. Parking brake system according to Claim 7, **characterized in that** the controller is designed in such a way that one of the methods claimed in the abovementioned method claims can be carried out.

## Revendications

1. Procédé de vérification de l'aptitude au fonctionnement d'un frein de stationnement à commande électrique (12, 13) comprenant un élément de manoeuvre (8) pour bloquer et/ou libérer le frein de stationnement (12, 13), un organe d'actionnement (6) pour modifier la pression de frein agissant sur le frein de stationnement (12, 13) ainsi qu'un appareil de commande (7) qui commande l'organe d'actionnement (6) à la demande, selon lequel on exploite une information relative à la vitesse de rotation de roue (n) pour vérifier l'aptitude au fonctionnement du frein de stationnement (12, 13),
**caractérisé en ce que**
pour vérifier si le frein de stationnement (12, 13) a été déverrouillé correctement, on augmente la pression d'un frein de roue (12), on déverrouille un frein de stationnement (12, 13) et on rétablit la pression de frein du frein de stationnement (12, 13) et ensuite on réduit de nouveau la pression de ce frein de roue (12) et on détermine la vitesse de rotation de roue (n) d'au moins une roue (14, 15) et on la compare à un seuil prédéfini (SW) pour vérifier la libération correcte du frein de stationnement (12, 13).

2. Procédé selon la revendication 1,
**caractérisé en ce que**
pour vérifier si le frein de stationnement (12, 13) a été verrouillé correctement on augmente la pression des freins de stationnement (12, 13) et celle d'au moins un autre frein de roue (12) et on réduit de nouveau la pression de frein sur cet autre frein de roue (12) et
on détermine la vitesse de rotation (n) d'au moins une roue (14, 15) et on la compare à un seuil prédéfini (SW) pour vérifier le verrouillage correct du frein de stationnement (12, 13).

3. Procédé selon la revendication 1,
**caractérisé en ce que**
pour vérifier si le frein de stationnement (12, 13) a été déverrouillé correctement, après le démarrage du véhicule on compare la vitesse de rotation (n) d'au moins une roue (14) avec le frein de stationnement (12, 13) et celle d'une roue (15) avec un frein de roue normal (12) et on compare la différence de vitesse de rotation à un seuil (SW) pour vérifier le déverrouillage correct du frein de stationnement (12, 13).

4. Procédé selon la revendication 1,
**caractérisé en ce que**
pour vérifier l'aptitude au fonctionnement d'une installation de verrouillage (13) d'un frein de stationnement (12, 13) on détermine la pente du trajet et pour une faible pente on augmente la pression de frein d'un frein normal (12) et on verrouille seulement une installation de verrouillage (13) d'un frein de stationnement (12, 13), on réduit de nouveau la pression du frein normal (12) et on détermine la vitesse de rotation d'au moins une roue (14, 15) pour la comparer à un seuil (SW) et vérifier l'aptitude au fonctionnement de l'actionnement de l'installation de verrouillage (13).

5. Procédé selon la revendication 4,
**caractérisé en ce qu'**
on effectue le même procédé ensuite avec l'autre installation de verrouillage (13).

6. Procédé selon l'une des revendications précédentes,
**caractérisé en ce qu'**
en cas de défaut on génère un signal d'alarme.

7. Système de frein de stationnement de véhicule automobile comprenant un élément de manoeuvre (8) pour le blocage et/ou la libération d'un frein de stationnement (12, 13), un organe d'actionnement (6) pour modifier la pression appliquée au frein de stationnement (12, 13) ainsi qu'un appareil de commande (7) qui commande à la demande l'organe d'actionnement (6),
le système de frein de stationnement comportant au moins un capteur de vitesse de rotation de roue (16) dont on exploite le signal de capteur pour vérifier l'aptitude au fonctionnement du frein de stationnement (12, 13),
**caractérisé en ce que**
pour vérifier que le frein de stationnement (12, 13) a été déverrouillé correctement, on augmente la pression appliquée à un frein de roue (12), on déverrouille un frein de stationnement (12, 13) et on réduit la pression du frein de stationnement (12, 13) puis on rétablit la pression du frein de roue (12) et on détermine la vitesse de rotation (n) d'au moins une roue (14, 15) et on la compare à un seuil prédéfini (SW) pour vérifier la libération correcte du frein de stationnement (12, 13).

8. Système de frein de stationnement selon la revendication 7,
**caractérisé en ce que**
l'appareil de commande est configuré pour mettre en oeuvre un procédé selon l'une des revendications de procédé précédentes.
